**Europäisches Patentamt**

**European Patent Office**

**Office européen des brevets**

(19)

(11) Veröffentlichungsnummer : **0 216 104 B2**

(12) ## NEUE EUROPÄISCHE PATENTSCHRIFT

(45) Veröffentlichungstag der neuen Patentschrift :
15.07.92 Patentblatt 92/29

(51) Int. Cl.$^5$ : **B60H 1/00**

(21) Anmeldenummer : **86111090.6**

(22) Anmeldetag : **11.08.86**

(54) Heiz- und Klimagerät für Kraftfahrzeuge.

(30) Priorität : **21.08.85 DE 3529940**

(43) Veröffentlichungstag der Anmeldung :
**01.04.87 Patentblatt 87/14**

(45) Bekanntmachung des Hinweises auf die
Patenterteilung :
**16.08.89 Patentblatt 89/33**

(45) Bekanntmachung des Hinweises auf die
Entscheidung über den Einspruch :
**15.07.92 Patentblatt 92/29**

(84) Benannte Vertragsstaaten :
**AT BE DE FR GB IT NL SE**

(56) Entgegenhaltungen :
**EP-A- 0 136 674**
**DE-A- 2 526 537**

(56) Entgegenhaltungen :
**DE-A- 3 039 148**
**DE-A- 3 107 324**
**DE-A- 3 302 377**
**US-A- 4 383 642**
**US-A- 4 390 124**
**PATENTS ABSTRACTS OF JAPAN, Band 5, Nr.
47 (M-61)(719) 28. März 1981; & JP-A-56 2208
(NISSAN JIDOSHA K.K.) 10.01.1981**

(73) Patentinhaber : **SIEMENS
AKTIENGESELLSCHAFT
Wittelsbacherplatz 2
W-8000 München 2 (DE)**

(72) Erfinder : **Hildebrand, Reinhard
Hauptstrasse 11
W-8627 Redwitz (DE)**
Erfinder : **Riedel, Friedrich
Dorfstrasse 44
W-8627 Redwitz (DE)**

EP 0 216 104 B2

**Beschreibung**

Heiz- und Klimagerät für Kraftfahrzeuge

Die Erfindung bezieht sich auf ein Heiz- und Klimagerät gemäß Oberbegriff des Anspruchs 1; ein derartiges Heiz- und Klimagerät ist aus der DE-A1-3 039 148 bekannt.

Bei dem durch die DE-A1-3 039 148 bekannten Heiz- und Klimagerät sind die erwähnten Aggeregate in einem langgestreckten Gehäuse hintereinander angeordnet, wobei durch die erste der beiden Luftklappen entweder ein direkter Weg für die Kaltluft vom Verdampfer zur Kammer ein etwa parallel verlaufender Weg für aufheizbare Kaltluft über den Wärmetauscher und durch die zweite, als Strömungsrichtungsklappe arbeitende, Luftklappe der direkte Kaltluftstrom einerseits bzw. der aufheizbare Luftstrom andererseits getrennt oder mehr oder weniger gemischt je nach Zielrichtung auf die Eintrittsöffnung eines der in die Kammer mündenden Luftstutzens für Heizluft bzw. Frischluft bzw. Entfrosten einstellbar ist. Der Wärmetauscher ist hierbei geneigt gegenüber dem Verdampfer angeordnet. Dies hat zur Folge, daß der Weg der Warmluft vom Verdampfer zu den Eintrittsöffnungen der Luftaustrittsstutzen größer ist als der entsprechende Weg der Kaltluft.

Um die gleiche Luftmengenverteilung und die gleichen Luftaustrittstemperaturen in den Luftaustrittsöffnungen zu erreichen, sind in den für Kraftfahrzeuge verwendeten Klima-und Heizgeräten üblicherweise zusätzliche Drosseln, Luftleitelemente und Strömungsstabilisatoren angeordnet (EP-A-0 102 611, DE-A1-3 300 737, DE-A1-3 302 377, DE-A1-3 347 304). Die Herstellung der Gehäuse ist bei solchen Vorrichtungen sehr aufwendig und der Einbau der erforderlichen zusätzlichen Elemente oft schwierig. Diese zusätzlichen Elemente führen auch zu einem unerwünschten Geräuschpegel. Ferner sind derartige Geräte jeweils nur zum Einbau in einen besimmten Fahrzeugtyp geeignet.

Durch die DE-A1-3 302 377 ist ein Kraftfahrzeug-Klimagerät mit einer Mischluftklappe an dem der Bodenfläche abgewandten Kaltlufteintritt zu dem Wärmetauscher bekannt, durch die das Mischluftverhältnis von direkt zu der Kammer mit den Luftaustrittsstutzen geförderten Kaltluft einerseits bzw. von über einen langen Strömungsweg von der Lufteintrittsseite des Wärmetauscher über dessen Austrittsseite und über einen Umleitungskanal an dessen Frontseite geförderten Warmluft mischbar ist; eine gleichmäßige Luftverteilung wird durch auf der Mischluftklappe angeordnete Luftleitplatten versucht.

Durch die DE-A1-3 107 324 ist eine Heiz- und Lüftungsanlage für ein Kraftfahrzeug und somit eine Anlage ohne Verdampfer, insbesondere ohne Hinweis auf dessen bauliche Zuordnung zu einem Wärmetauscher, mit je einer, untereinander in Mitnahmeverbindung stehender, Absperrklappe am Eingang bzw. am Ausgang des Wärmetauschers sowie einer davon unabhängigen Verteilerklappe in einer Verteilerkammer zur Freigabe bzw. Absperrung von aus dieser Verteilerkammer abgehenden Luftaustrittsstutzen bekannt.

Durch die DE-AS-25 26 537 ist eine Heiz- oder Klimaanlage für Kraftfahrzeuge mit einem senkrecht zur Bodenfläche des Geräteboden angeordneter Wärmetauscher mit lediglich einer Mischluftklappe am Eingang des Wärmetauschers bzw. Frischluftkanals bekannt, derart daß z.B. bei reiner Frischlufteinstellung der Luftstrom auch noch den durch eine Restaufheizung erwärmten Wärmetauscher bestreichen kann und somit allenfalls mit merklicher Verzögerung als kalte Frischluft dem Fahrgast zur Verfügung steht.

Durch die US-A-4 383 642 ist eine Heiz- und Klimaanlage für ein Kraftfahrzeug mit einem im wesentlichen hochkant angeordneten und einer wiederum am Eingang des Wärmetauschers bzw. des Frischluftkanals angeordneten Mischluftklappe bekannt; eine am Ausgang des Wärmetauschers vorgesehene, von der zuvor erwähnten Mischluftklappe unabhängig betätigbare Luftklappe dient lediglich der Absperrung des Ausgangs des Wärmetauschers.

Durch die US-PS-4 390 124 is weiterhin ein Heizgerät bekannt bei dem zur Steuerung der aufzuheizenden Kaltluft dem Wärmetauscher eine erste Mischluftklappe vorgeschaltet und eine zweite Mischluftklappe nachgeschaltet ist, wobei beide Mischluftklappen miteinander gekoppelt sind. In der zylindrisch ausgebildeten Mischkammer ist weiterhin eine um eine zentrale Achse drehbare Luftklappe angeordnet, mit der die Verteilung der Luft auf die verschiedenen Auslaßöffnungen vorgenommen wird.

Ausgehend von einem Heiz- und Klimagerät mit den Merkmalen des Oberbegriffes des Patentanspruches 1 liegt der Erfindung die Aufgabe zugrunde, das Klimagerät so auszugestalten, daß es bei kompakter Zuordnung seiner Aggregate mittig im Kraftfahrzeug angeordnet werden kann und damit sowohl für Fahrzeuge mit links als auch mit rechts angeordneter Lenkung verwendbar ist; die Zuordnung der Aggregate soll weiterhin so getroffen sein, daß ohne Verwendung von Luftleitelementen, Drosseln und Strömungsstabilisatoren in allen Eintriffsöffnungen für die einzelnen Luftaustrittsstutzen gleiche Lufttemperaturen und gleiche Luftmengen erreicht werden.

Zur Lösung dieser Aufgabe gelingt bei einem Heiz- und Klimagerät der eingangs genannten Art durch die Lehre des Anspruchs 1; vorteilhafte Ausgestaltungen der Erfindung sind jeweils Gegenstand der Unteransprüche.

EP 0 216 104 B2

Bei der erfindungsgemäßen Ausgestaltung des Heiz- und Klimagerätes ergibt sich durch die spezifische bauliche Zuordnung von Wärmetauscher einerseits und Verdampfer andererseits in Verbindung mit den beanspruchten Werten für die Warmluft-bzw. Kaltluftwege zusammen mit der Mischluftklappe am Eingang der Mischkammer bei Gewährleistung gleicher Lufttemperaturen und gleicher Luftmenge in sämtlichen einzelnen Luftaustrittsstutzen ein baulich kompaktes Klima- und Heizgerät für Kraftfahrzeuge, das an seiner dem Fahrzeuginnenraum zugewandten Vorderkante keine Einschränkungen bei der freien Gestaltung eines Armaturenbretts auferlegt, da der Wärmetauscher unterhalb des Armaturenbretts in einem an sich vorhandenen mittigen Freiraum hineinragt und die die Luftströmungen gleichmäßig verteilende Kammer gegenüber dem Armaturenbrett weit zurückliegend angeordnet ist.

Ein Ausführungsbeispiel der Erfindung ist in den Figuren 1 bis 4 dargestellt. Dabei zeigt

Figur 1 einen vertikalen Schnitt durch das Gerät,

Figur 2 eine Seitenansicht des Gerätes nach Figur 1,

Figur 3 einen Schnitt gemäß Figur 1 mit einer Mittestellung der Luftklappen und

Figur 4 die dem Wärmetauscher nachgeschaltete Mischlutklappe.

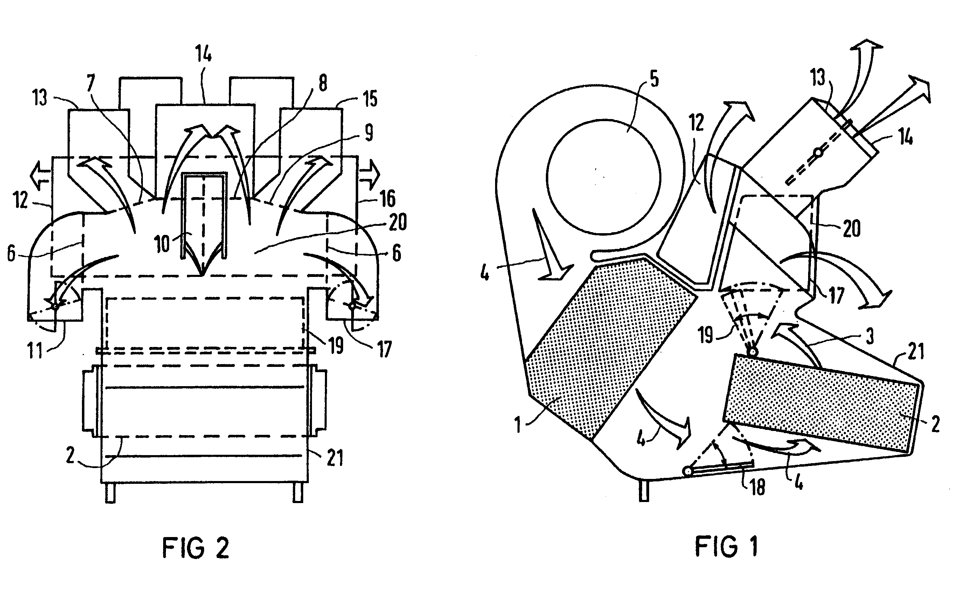

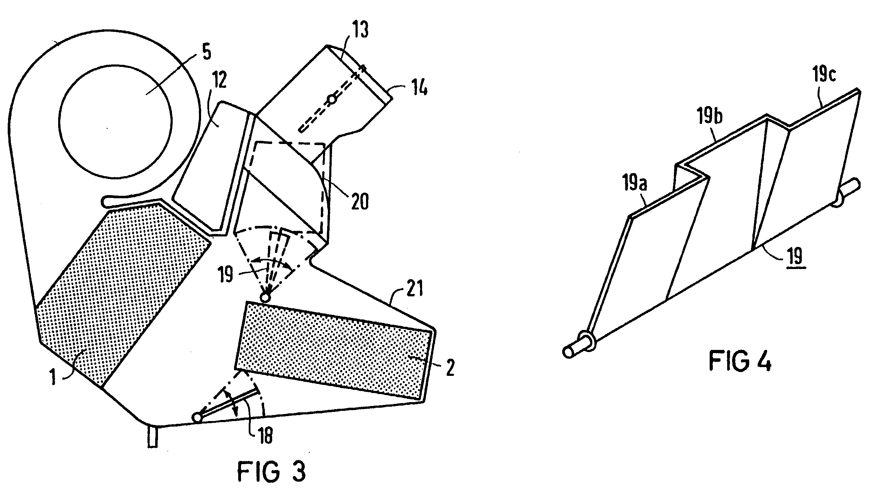

Die Figuren 1, 2 und 3 zeigen ein Heiz- und Klimagerät mit luftseitiger Temperatursteuereung. In einem Kunststoffgehäuse 21 ist ein Verdampfer 1 angeordnet, dem über ein mittig angeordnetes Gebläse 5 Kaltluft 4, also Frisch- bzw. Umluft zugeführt wird. Vor dem (querliegend zum Verdampfer 1 angeordneten und dem Verdampfer nachgeschalteten) Wärmetauscher 2 ist eine Absperrklappe 18 angeordnet. Hinter dem Wärmetauscher 2 ist eine Mischluftklappe 19 angeordnet. Beide klappen sind an dem Gehäuse 1 angebracht und miteinander gekoppelt. Ihre Einstellung bestimmt den Anteil der aus dem Verdampfer 1 in den Wärmetauscher 2 eintretenden Luft. In Figur 1 sind die Luftklappen 18 und 19 so eingestellt, daß die gesamte Kaltluftmenge durch den Wärmetauscher 2 hindurchtritt, der an eine Wärmequelle angeschlossen ist. In Figur 3 sind die Luftklappen 18 und 19 ein einer Mittelstellung dargestellt. Weitere Zwischenstellungen sind möglich; hierdurch wird die gewünschte gleichmäßige Temperatur der Luft in den Eintrittsöffnungen 6, 7, 8, 9, 10 erreicht.

Die aus de Wärmetauscher 2 austretende Warmluft 3 strömt direkt in die gemeinsame Kamer 20 hinein, die mit Einstrittsöffnungen 6, 7, 8, 9, 10 versehen ist. Diese Eintrittsöffnungen sind mit Luftaustrittsstutzen für die Fußraumdüsen 11 und 17, für die Außendüsen 12 und 16, für die Defrosterdüsen 13 und 15 und für die Mitteldüse 14 versehen. Die Eintrittsöffnungen der Luftaustrittsstutzen zu den Fußraum- und Entfrosterdüsen und zu der Mitteldüse sind im Gehäuse vorgesehen.

Gemäß Figur 4 ist die Mischluffklappe 19 in die beiden äußeren Klappenabschnitte 19a und 19c und den mittleren Klappenabschnitt 19b unterleilt. Der mittlere Klappenabschnitt ist gegenüber den beiden anderen Klappenabschnitten radial versetzt angeordnet. Hierdurch können unterschiedliche Temperaturen in den Eintrittsöffnungen für die einzelnen Luftaustrittsebenen erreicht werden.

## Patentansprüche

1. Klima- und Heizgerät für Kraftfahrzeuge, bestehend aus einem Kunststoffgehäuse (21), in dem ein Gebläse (5), ein Verdampfer (1), ein Wärmetauscher (2), eine dem Wärmetauscher vorgeschaltete erste Luftklappe (18) und eine dem Wärmetauscher nachgeschaltete zweite Luftklappe (19) sowie eine Kammer (20) mit mehreren Eintrittsöffnungen für einzelne Luftaustrittsstutzen angeordnet sind, wobei der Weg der Warmluft vom Verdampfer zu den Eintrittsöffnungen größer ist als der entsprechende Weg der Kaltluft, **dadurch gekennzeichnet**, daß die Kammer (20) mit Eintrittsöffnungen (6, 7, 8, 9, 10) zu den Luftaustrittsstutzen für die Defrost-, Außen-, Mittel- und Fußraumebene des Fahrgastraumes versehen ist, daß der Wärmetauscher (2) derart flachliegend geneigt zur Bodenfläche des Kunststoffgehäuses (21) querliegend zum Verdampfer (1) und die Kammer (20) derart oberhalb des verdampferseitigen Endes des Wärmetauschers (2) angeordnet sind, daß der Weg der Warmluft vom Verdampfer zu den Eintrittsöffnungen (6, 7, 8, 9, 10) das 1,3 bis 1,8fache des entsprechenden Weges der Kaltluft beträgt und daß von den beiden miteinander gekoppelten Luftklappen (18, 19) die erste Luftklappe allein als Absperrklappe (18) für den bodenflächenseitigen Kaltlufteintritt zu dem Wärmetauscher (2) und die zweite Luftklappe als am gemeinsamen Eintritt von Warmluft und Kaltluft in die Kammer (20) zwischen einer Absperrung der Kaltluft einerseits bzw. einer Absperrung der Warmluft andererseits schwenkbare Mischluftklappe (19) ausgebildet sind.

2. Klima- und Heizgerät nach Anspruch 1 dadurch gekennzeichnet, daß die Kammer (20) entsprechend den Luftaustrittsebenen im Fahrgastraum in Fußraum-, Außen-, Mittel- und Defroterebene unterteilt ist.

3. Klima- und Heizgerät nach Anspruch 1 oder 2, dadurch gekennzeichnet, daß die dem Wärmetauscher (2) nachgeschaltete Mischlufklappe (19) in radial zueinander versetzt angeordnete Klappenabschnitte (19a, 19b, 19c) unterteilt ist.

3

## EP 0 216 104 B2

## Claims

1. Air-conditioning and heating device for motor vehicles, consisting of a plastic housing (21), in which there are arranged a blower (5), an evaporator (1), a heat exchanger (2), a first air flap (18), which is connected ahead of the heat exchanger, and a second air flap (19), which is connected after the heat exchanger, and also a chamber (20) with several inlet openings for individual air outlet connection pieces, the path of the warm air from the evaporator to the inlet openings being greater than the corresponding path of the cold air, **characterised** in that the chamber (20) is provided with inlet openings (6, 7, 8, 9, 10) to the air outlet connection pieces for the defrost, outer, central and foot-well level of the passenger compartment, in that the heat exchanger (2) is arranged so that lying flat it is inclined in relation to the base area of the plastic housing (21) lying crosswise to the evaporator (1) and the chamber (20) is arranged above that end of the heat exchanger (2) which is on the evaporator side, both being arranged in such a way that the path of the warm air from the evaporator to the inlet openings (6, 7, 8, 9, 10) amounts to 1.3 to 1.8 times the corresponding path of the cold air and in that of the two air flaps (18, 19), which are coupled one with the other, the first air flap alone is constructed as a shut-off flap (18) for the base area-side cold air inlet to the heat exchanger (2) and the second air flap is constructed as a mixed air flap (19) which at the common inlet of warm air and cold air into the chamber (20) can be swung between a position shutting off the cold air on the one side and a position shutting off the warm air on the other side.

2. Air-conditioning and heating device according to claim 1, characterised in that the chamber (20) is subdivided, in accordance with the air outlet levels in the passenger compartment, into foot-well, outer, central and defroster levels.

3. Air-conditioning and heating device according to claim 1 or 2, characterised in that the mixed air flap (19), which is connected after the heat exchanger (2), is subdivided into flap sections (19a, 19b, 19c) arranged radially staggered in respect of one another.

## Revendications

1. Dispositif de climatisation et de chauffage pour des véhicules automobiles, constitué par une enveloppe en matière plastique (21) dans laquelle sont disposés une soufflante (5), un évaporateur (1), un échangeur de chaleur (2), un premier volet d'air (18) disposé en amont de l'échangeur de chaleur, et un second volet d'air (19) qui est disposé en aval de l'échangeur de chaleur, ainsi qu'une chambre (20) comportant plusieurs ouvertures d'entrée pour différents embouts de sortie de l'air, le chemin de l'air chaud depuis l'évaporateur jusqu'aux ouvertures d'entrée étant supérieur au chemin correspondant de l'air froid, **caractérisé** par le fait que la chambre (20) est pourvue d'ouvertures d'entrée (6, 7, 8, 9, 10) vers les embouts de sortie de l'air pour le plan de dégivrage, le plan extérieur, le plan médian et le plan du plancher de l'habitacle, que l'échangeur de chaleur (2) est disposé à plat et incliné par rapport à la surface du fond de l'enveloppe en matière plastique (21) et transversalement par rapport à l'évaporateur (1), alors que la chambre (20) est disposée de telle façon au-dessus de l'extrémité, côté évaporateur de l'échangeur de chaleur (2), que le chemin de l'air chaud entre l'évaporateur et les ouvertures d'entrée (6, 7, 8, 9, 10) est égal à 1,3 à 1,8 fois le chemin correspondant de l'air froid, et que parmi les deux volets d'air (18, 19) qui sont couplés entre eux, le premier volet d'air est réalisé, en soi, comme volet d'obturation (18) pour l'entrée de l'air froid, située du côté de la surface du fond, de l'échangeur de chaleur (2), alors que le second volet d'air est réalisé sous la forme d'un volet d'air de mélange (19) susceptible d'être basculé, au niveau de l'entrée commune d'air chaud et d'air froid dans la chambre (20), entre une position d'obturation de l'air froid, d'une part, ou d'obturation de l'air chaud, d'autre part.

2. Dispositif de climatisation et de chauffage suivant la revendication 1, caractérisé en ce que la chambre (20) est subdivisée, en fonction des plans de sortie de l'air dans l'habitacle, en un plan de plancher, en un plan extérieur, en un plan médian et en un plan de dégivrage.

3. Dispositif de climatisation et de chauffage suivant la revendication 1 ou 2, caractérisé en ce que le volet (19) destiné à de l'air de mélange, qui est monté en aval de l'échangeur de chaleur (2), est subdivisé en des tronçons de volet (19a, 19b, 19c) disposés en étant radialement décalés les uns par rapport aux autres.

FIG 1

FIG 2

FIG 3

FIG 4

6